(19) Europäisches Patentamt / European Patent Office / Office européen des brevets

(11) **EP 2 256 663 B1**

(12) **FASCICULE DE BREVET EUROPEEN**

(45) Date de publication et mention
de la délivrance du brevet:
**26.08.2015 Bulletin 2015/35**

(51) Int Cl.:
***G06K 7/00*** *(2006.01)*

(21) Numéro de dépôt: **10163193.5**

(22) Date de dépôt: **19.05.2010**

(54) **Activation d'un dispositif sans contact par un dispositif capacitif**

Aktivierung einer kontaktlosen Vorrichtung durch eine kapazitive Vorrichtung

Activation of a contactless device by a capacitive device

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **28.05.2009 FR 0953533**

(43) Date de publication de la demande:
**01.12.2010 Bulletin 2010/48**

(73) Titulaire: **Compagnie Industrielle et Financière
d'Ingénierie "Ingenico"
92200 Neuilly sur Seine (FR)**

(72) Inventeur: **Lacroix, Pierre
07130 Saint Peray (FR)**

(74) Mandataire: **Vidon Brevets & Stratégie
16B, rue de Jouanet
BP 90333
35703 Rennes Cedex 7 (FR)**

(56) Documents cités:
**WO-A-00/65551          DE-C1- 3 840 180
US-A1- 2005 156 752**

**Description**

## 1 DOMAINE DE L'INVENTION

La présente invention concerne les lecteurs de circuit intégré sans contact et la transmission de données par couplage inductif.

Plus particulièrement, la présente invention concerne la mise en oeuvre des lecteurs de circuits intégrés sans contact.

Les lecteurs de circuits intégrés sans contact sont désormais utilisés dans de nombreuses applications. En effet, aux cours des dernières années, les applications des circuits intégrés sans contact, tel que les puces dite RFID (de l'anglais « Radio Frequency Identification ») ont été multipliées : elles vont de l'identification (par exemple l'identification de produits en cours de fabrication ou l'identification de personnes à l'aide de passeport ou de cartes d'accès) au paiement (telles que les opérations de micro paiement dans des distributeurs de boisson ou pour des parcmètres).

Ainsi, des lecteurs de circuits intégrés sans contact (également appelés lecteur sans contact par la suite) se retrouvent désormais installés dans de nombreux endroits.

La présente invention se rapporte plus particulièrement à la mise en oeuvre de tels lecteurs sans contact afin d'optimiser leur fonctionnement.

## 2 ART ANTERIEUR

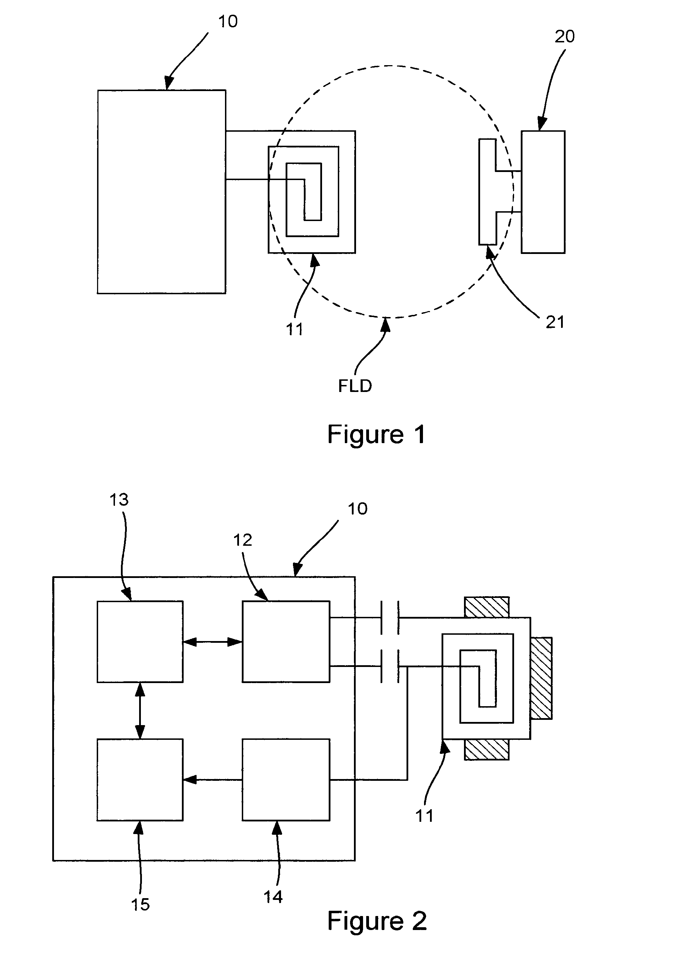

Comme représenté schématiquement en figure 1, un lecteur classique et bien connu de circuit intégré sans contact 10 fonctionnant par couplage inductif est un système actif qui émet un champ magnétique alternatif FLD au moyen d'une antenne 11 et envoie des données par modulation de l'amplitude du champ magnétique émis.

A l'inverse, un circuit intégré sans contact 20 (également appelée puce sans contact ou tag RFID), est un dispositif généralement passif qui n'émet pas de champ magnétique et comporte une antenne 21 équivalent à l'enroulement secondaire d'un transformateur dont l'enroulement primaire serait constitué par le circuit d'antenne 11 du lecteur de circuit intégré. Le champ magnétique FLD émis par le lecteur fait apparaître dans le circuit d'antenne du circuit intégré 20 une tension alternative induite « Vac », qui copie les modulations d'amplitude du champ magnétique et permet au circuit intégré 10 de recevoir les données émises par le lecteur, après filtrage et démodulation de la tension induite « Vac ».

Par ailleurs, un circuit intégré sans contact 20 envoie des données au lecteur par modulation de charge, c'est-à-dire en court-circuitant son circuit d'antenne au moyen d'un interrupteur piloté par un signal de modulation de charge « Sx ». Les courts circuits d'antenne engendrent une perturbation du champ magnétique FLD qui se répercute dans le circuit d'antenne du lecteur 10.

Ce dernier peut ainsi extraire le signal de modulation de charge « Sx » par filtrage du signal présent dans son circuit d'antenne 11 et en déduire les données envoyées par le circuit intégré sans contact.

Pour pouvoir lire le circuit intégré sans contact dès qu'il est présenté devant le lecteur, il est nécessaire de recourir à une émission continue du champ magnétique FLD. En fonction des régions du monde, une telle émission de radiofréquence est réalisée à des fréquences variables qui peuvent aller de 125 kHz à 2,45 GHz. Ces fréquences sont régies par des normes (915 MHz aux États-Unis, de 865 MHz à 868 MHz dans l'Union européenne pour l'UHF).

Le champ magnétique émis par le lecteur sans contact pour pouvoir réaliser des opérations avec le circuit intégré sans contact nécessite ainsi des puissances électriques conséquentes. Or, de telles puissances peuvent ne pas être adaptées à des dispositifs qui fonctionnent de manière autonome, c'est-à-dire sans apport électrique en provenance d'un réseau de distribution de l'électricité. Ceci est par exemple le cas des parcmètres qui fonctionnent à l'énergie solaire. De tels dispositifs qui fonctionnent de manière autonome disposent généralement d'un apport électrique solaire (par l'intermédiaire de capteurs photovoltaïques) et de batteries qui permettent de stocker l'électricité obtenues. Cependant, lorsque l'apport photovoltaïque est insuffisant, les batteries de stockage de l'électricité se déchargent très vite et entraînent une mise hors service assez rapide de l'appareil.

Pour pallier ce problème, il a été proposer de munir ces appareils de boutons (boutons poussoir mécaniques ou autres boutons de mise sous tension) pour l'activation du lecteur sans contact pendant un délai au cours duquel l'utilisateur doit présenté, devant le lecteur sans contact, le circuit intégré sans contact qu'il possède. Outre le fait que ces boutons sont susceptibles d'être exposés à des dégradations, ils présentent l'inconvénient de réduire les avantages liés à l'utilisation d'un circuit intégré sans contact.

En effet, pour activer le lecteur de circuit intégré sans contact, l'utilisateur doit alors réaliser une opération supplémentaire (l'activation du lecteur à l'aide du bouton de mise sous tension) ce qui réduit franchement l'attrait du « sans contact » qui est supposé permettre à l'utilisateur de ne pas avoir à se soucier de l'aspect procédural de l'utilisation d'un tel circuit. De plus, il est nécessaire que l'utilisateur présente le circuit sans contact (qui est par exemple contenu dans une carte à puce) devant le lecteur sans contact, dans un délai dont il n'a pas la maîtrise : ce délai est celui que le fabriquant de l'appareil a jugé le plus pertinent suite à l'activation du bouton de mise sous tension du lecteur sans contact.

Ainsi, la solution permettant de réduire la consommation électrique à l'aide d'un bouton ou d'un interrupteur n'est pas satisfaisante car elle impose des contraintes qui sont mal perçues par les utilisateurs.

On connaît d'autres méthodes de réduction de la consommation de courant du document WO/2003/052672. Cette méthode est basée sur l'inductance mutuelle qui est créée entre le lecteur sans contact et le circuit intégré sans contact lorsque ces deux éléments sont proches les uns des autres. Cependant, le lecteur décrit dans ce document nécessite également une émission de champ magnétique et donc une consommation de courant en émission ce qui n'est pas satisfaisant.

Pour réduire la consommation électrique, le document WO 00/65551 propose un lecteur qui comprend un détecteur passif permettant de détecter l'introduction d'un TAG RFID pour activer l'opération de lecture. Ce détecteur passif peut être un détecteur infrarouge ou un détecteur capacitive. Cependant, il ne précise pas la structure et l'emplacement d'un tel détecteur capacitive. Le document DE 3740180 C1 décrit une structure des antennes plates pour application capacitive, mais il ne concerne pas les lecteurs de circuit intégré sans contact.

Pour résoudre le même problème technique (réduction de la consommation électrique), le document US 2005/156752 A1 décrit un dispositif d'activation utilisant une clé magnétique. Cependant, il requiert l'usage d'un dispositif spécifique (bobine d'identification) qui est plus couteux et compliqué.

## 3 RESUME DE L'INVENTION

L'invention ne présente pas les inconvénients de l'art antérieur. En effet, l'invention concerne un lecteur de circuit intégré sans contact comprenant une antenne d'émission d'un champ magnétique permettant une communication avec un circuit intégré sans contact dans un périmètre de communication du lecteur et un circuit de lecture de circuit intégré sans contact, caractérisé en ce que les moyens de détection comprennent :

- des moyens de mesure d'une capacité, délivrant une information de proximité dudit circuit intégré sans contact ;
- des moyens d'activation dudit circuit de lecture de circuit intégré sans contact en fonction de ladite information de proximité.

Ainsi, le circuit de lecture de circuit intégré sans contact n'est activé que lorsqu'une capacité suffisante est mesurée par les moyens de mesure de capacité ou de mesure de variation de capacité et que cette capacité indique que le circuit intégré sans contact est proche du périmètre de communication du lecteur. Ainsi, comme le circuit de lecture n'est pas activé en permanence, on réduit fortement la consommation électrique de l'ensemble du dispositif. Il est donc adapté à un usage nomade (sur batterie) ou à un usage déconnecté du réseau électrique traditionnel (comme par exemple un parcmètre à énergie solaire).

Selon une caractéristique particulière de l'invention, lesdits moyens de mesure d'une capacité comprennent :

- un capteur capacitif ;
- un circuit de mesure d'une capacité obtenu par ledit capteur capacitif délivrant ladite information de proximité lorsque la capacité mesurée excède un seuil prédéterminé.

Selon le mode de réalisation de l'invention de la revendication 1, ledit capteur capacitif est formée à l'aide d'au moins une portion d'un blindage de ladite antenne d'émission d'un champ magnétique, ledit blindage protégeant des circuits électroniques dudit circuit intégré sans contact.

Ainsi, on utilise un élément du lecteur sans contact qui préexiste à la fonction de détection capacitive du lecteur. La fabrication d'un tel lecteur selon l'invention ne nécessite ainsi pas l'adjonction d'une nouvelle antenne et est donc moins chère.

Selon un mode de réalisation particulier qui ne fait pas partie de l'invention, ledit capteur capacitif est constituée d'au moins une piste tracée sur un circuit imprimé recevant des composants électroniques dudit lecteur.

Ainsi, il n'est pas nécessaire d'adjoindre un élément mécanique supplémentaire au lecteur de circuit intégré sans contact. Ainsi, on réalise une économie substantielle lors de la fabrication du lecteur sans contact .

Selon le mode de réalisation de l'invention de la revendication 2, ledit capteur capacitif et ladite antenne d'émission dudit champ magnétique forment une seule et même antenne dont l'inductance et la conductance sont adaptée pour remplir les fonctions de communication sans contact et de détection capacitive.

Ainsi, il n'est pas nécessaire de prévoir le tracé de deux pistes différentes sur le circuit imprimé du lecteur. Une seule et unique piste est utilisée sur le circuit imprimé pour former une antenne qui rempli les deux fonctions de communication sans contact (par l'émission d'un champs magnétique) et de détection capacitive. Pour ce faire, la forme de la piste est adaptée et l'inductance et la capacité de cette piste sont adaptées à la double fonction.

Selon le mode de réalisation de l'invention de la revendication 3, ledit capteur capacitif est disposée à un emplacement auquel le champ magnétique émis par ladite antenne d'émission dudit champ magnétique est sensiblement nul.

Selon une caractéristique particulière de l'invention de la revendication 3, ledit lecteur de circuit intégré sans contact comprend en outre des moyens de saisie capacitifs d'une information.

L'invention concerne également des procédés d'activation d'un circuit de lecture d'un circuit intégré sans contact, ledit circuit de lecture étant intégré à un lecteur de circuit intégré sans contact, selon les revendications 5 à 7.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'activation tel que décrit précédemment.

## 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà commentée, présente une représentation d'un lecteur de circuit intégré sans contact classique ;
- la figure 2 le principe général de l'invention ;
- la figure 3 décrit un premier mode de réalisation d'une antenne ;
- la figure 4 décrit un deuxième mode de réalisation d'une antenne ;
- la figure 5 décrit un troisième mode de réalisation d'une antenne ;
- La figure 6 décrit le procédé d'activation selon un mode de réalisation de l'invention.

## 5 DESCRIPTION DETAILLEE DE L'INVENTION

### 5.1 Rappel du principe de l'invention

L'idée à la base de l'invention consiste à coupler un système de détection capacitive à un système de communication sans contact d'un terminal de paiement ou tout autre équipement pouvant embarquer les deux systèmes

Selon l'invention, le couplage de ces deux systèmes permet la mise à l'arrêt du lecteur sans contact lorsqu'il n'est pas utilisé et d'effectuer la détection de la présence d'une carte sans contact par le système capacitif qui est beaucoup moins consommateur d'énergie.

En effet ce dernier système est passif à l'inverse du lecteur sans contact qui doit émettre pour pouvoir détecter la présence d'une carte dans son environnement. Selon l'invention, le pilotage des deux systèmes est assuré par le processeur du système principal qui met en service le lecteur sans contact après détection d'une présence par le système capacitif. Une fois le lecteur sans contact activé le système de détection capacitif peut offrir des fonctions supplémentaires (consultation de solde,...) sans surcoût.

L'invention propose de munir le lecteur sans contact de moyens de détection capacitifs de la présence du circuit intégré sans contact ou de la main ou d'une autre partie du corps de l'utilisateur qui porterait ce circuit intégré sans contact (par exemple, et comme cela est souvent le cas, le circuit intégré sans contact peut être présenté sous la forme d'une carte à puce). Ces moyens de détection capacitifs se présentent sous la forme, d'une part d'une antenne et d'autre par sous la forme d'un circuit électronique adéquat.

Dans certains modes de réalisation de l'invention, le dispositif de détection capacitif et le dispositif de détection sans contact (également appelé dispositif RF, pour « Radio Fréquence ») utilisent des antennes indépendantes : il y a une antenne pour la détection capacitive et une antenne pour la détection et la communication sans contact.

Dans d'autres modes de réalisation de l'invention, qui présentent d'autres avantages, le capteur capacitif et l'antenne sans contact forment une seule et même antenne. Cette antenne est spécialement conçue pour répondre aux contraintes du lecteur sans contact et aux contraintes du système capacitif. Une telle intégration présente des avantages indéniables : il n'est pas nécessaire de recourir à deux antennes pour réaliser respectivement la détection de présence du circuit sans contact et établir un dialogue avec celui-ci. La fabrication d'une telle antenne peut donc être réalisée en traçant, sur un circuit imprimé destiné à recevoir les composants électroniques du lecteur sans contact, une piste qui permette de réaliser une telle antenne.

Selon une caractéristique particulière de l'invention, l'antenne comprend également des endroits qui permettent de définir des emplacements de saisies d'information. Plus particulièrement, ces endroits, qui ne seront pas visibles une fois le dispositif monté et enfermé dans son boîtier, sont destinés à déterminer la présence ou l'absence d'un doigt d'un utilisateur par exemple lors d'opérations de maintenance du dispositif. Ces emplacements de saisis sont également dénommés « boutons cachés » car ils ne sont pas visibles par l'utilisateur et sont connus uniquement des utilisateurs autorisés.

Selon l'invention, la mise en oeuvre d'un tel lecteur sans contact comprend les étapes suivantes :

- détection, par le circuit capacitif, d'une présence à proximité lecteur sans contact ;
- activation, par le circuit capacitif, du circuit sans contact lorsque ladite présence est avérée.

La détection de la présence est réalisée lorsqu'une valeur ou une variation de capacité excède un seuil préalablement déterminé. La variation dans le temps de la capacité permet dans certains cas de détecter la proximité d'un circuit intégré sans contact. En effet, les inventeurs ont découvert, lors des expérimentations menées, qu'un objet pouvait créer une capacité permanente lorsque cet objet est par exemple posé sur le capteur capacitif par inadvertance. Cependant, un tel objet posé par inadvertance ne fait pas varier la capacité. Elle atteint une valeur déterminée tant que l'objet est posé et ne varie pas. Ainsi, il peut être envisagé, plutôt que de détecter le simple dépassement de seuil de détecter une variation de capacité, afin de ne pas maintenir une activation du circuit sans contact à tort.

Le seuil à excéder peut avantageusement être paramétré en fonction soit de condition d'utilisation du lecteur sans contact soit d'un emplacement de celui-ci. La détection fournit une information de présence. On note que seule une information de présence est fournie. Au moment où la présence est détectée (par l'intermédiaire du capteur capacitif et du circuit de détection associé), il n'est pas encore établi que cette présence correspond à un circuit intégré sans contact. Ainsi, il est prévu, selon l'invention, de détecter une présence à proximité du lecteur, de réaliser une ou plusieurs tentatives de communication avec un circuit intégré sans contact et de désactiver le circuit sans contact lorsque les tentatives de communication successives n'ont pas abouti à une communication avec le circuit intégré sans contact.

Par la suite, on présente des modes de réalisation d'un dispositif lecteur de sans contact selon l'invention, et notamment des modes de réalisation des antennes permettant la double fonction de détection capacitive et de communication sans contact. Il est clair cependant que l'invention ne se limite pas à cette application particulière, mais peut également être mise en oeuvre dans de nombreux autres contextes de détection, par exemple en vue de l'utilisation de terminaux de paiement portables et plus généralement dans tous les cas où les avantages listés sont intéressants.

5.2 Description d'un mode de réalisation

On présente dans ce mode de réalisation, un lecteur sans contact selon l'invention dans lequel un dispositif de détection capacitif a été monté sur le circuit imprimé afin de permettre la détection de l'approche de la main de l'utilisateur ou d'une carte qu'il détient préalablement à l'activation du dispositif sans contact en tant que tel.

Dans ce mode de réalisation, le couplage des dispositifs s'effectue au moyen de l'antenne du lecteur sans contact qui est conçue de façon à remplir les deux fonctions de capteur sans contact et d'antenne de communication sans contact RF (Radio Fréquence) pouvant être utilisé à la fois par les deux dispositifs (capacitifs et sans contact) simultanément ou non.

Pour satisfaire aux exigences des deux fonctions (antenne RF pour le lecteur sans contact et de capteur capacitif pour le dispositif capacitif), l'antenne est conçue de façon à conserver le coefficient de qualité requis pour la fonction sans contact tout en présentant une impédance qui permette un couplage par capacité de valeur relativement faible afin de représenter une capacité parasite acceptable et l'isolement galvanique nécessaire pour le dispositif de détection capacitif.

Cette antenne est réalisée au moyen de conducteurs ou pistes conductrices disposés sur des circuits souples ou rigides. La largeur, longueur et la forme de ces pistes réalisent à la fois l'inductance et la capacité nécessaire aux deux fonctions. Ces dimensions sont adaptées en fonction du produit dans lequel l'antenne est embarquée.

L'utilisation de l'antenne du système sans contact ainsi réalisée permet d'obtenir un capteur capacitif de grande taille rendant le système de détection capacitif très sensible.

L'application directe de cette invention est de permettre la mise à l'arrêt du système sans contact (circuit et émission de champs magnétique) et d'effectuer la détection de la présence d'une carte par le système capacitif qui est beaucoup moins consommateur d'énergie.

En effet ce dernier est passif à l'inverse du système sans contact qui doit passer en émission pour pouvoir détecter la présence d'une carte dans son environnement.

Comme illustré en figure 2, dans ce mode de réalisation de l'invention, une antenne, l'antenne 11 (qui porte la double fonction sans contact et capacitive) est reliée à un dispositif d'adaptation d'antenne 12. Celui-ci est chargé de réaliser le couplage entre les fonctions capacitives et les fonctions sans contact. Le dispositif d'adaptation d'antenne 12 est connecté au dispositif sans contact 13 auquel il fournit les signaux reçus du circuit intégré sans contact 20 lorsque celui-ci est à proximité de l'antenne 11 et que le dispositif sans contact a été précédemment activé par le dispositif de détection capacitif 14 qui a transmis une requête d'activation au processeur principal 15 du lecteur sans contact 10. Le processeur principal 15 procède alors à l'activation du dispositif sans contact 13 qui émet une requête d'identification par l'intermédiaire d'un champ magnétique produit par l'antenne 11. Le dispositif de détection capacitif 14 est également connecté à l'antenne 11. Comme ce dispositif est un dispositif passif, il ne consomme que très peu de courant (quelques dizaines de μA en moyenne).

Le dispositif d'adaptation de l'antenne 12 (également appelé circuit de couplage) est intercalé entre l'antenne 11 et les deux dispositif sans contact 13 et détection capacitive 14. Ce circuit assure à la fois le couplage des fonctions et l'isolation nécessaire afin que les deux systèmes ne se perturbent pas.

Dans un mode de réalisation particulier de l'invention, le système d'adaptation d'impédance de l'antenne sans contact peut être mis à profit pour réaliser cette fonction de couplage des deux systèmes.

5.2.1 Description de l'antenne dans sa fonction sans contact

L'antenne 11, pour sa fonction sans contact peut prendre diverses formes physiques ou géométriques. Elle est constituée principalement d'un conducteur qui peut être réalisé de différentes façons comme par exemple au moyen d'une piste imprimée sur un substrat isolant souple (ou rigide) dessiné de façon à réaliser une inductance.

Pour une forme régulière (circulaire) la valeur de l'inductance ainsi réalisée peut être évaluée selon la formule suivante :

$$L = \frac{24{,}6N^2 \times D}{1 + 2{,}75\dfrac{S}{D}}$$

Où

« L » est l'inductance en nH
« D » correspond au diamètre moyen de l'antenne (en centimètre) ;
« S » est la section de l'antenne (en centimètre) ;
« N » est le nombre de tours de la spire.

Les caractéristiques principales de l'antenne pour cette fonction peuvent être résumées comme suit :

- une valeur d'inductance de l'ordre de 1μH (dépendant de l'électronique utilisée pour la fonction) ;
- une surface de rayonnement minimum (ex. 36cm$^2$ environ nécessaires actuellement dans nos applications pour les performances visées) ;
- une dimension minimum en relation avec la surface définie précédemment (6cm x 6cm par exemple).

Enfin cette inductance (ou antenne) ainsi formée peut être entourée ou superposée d'un conducteur de façon à créer un blindage en vue de limiter partiellement ou totalement sa sensibilité au champ E (champ électrique).

Dans au moins un mode de réalisation de l'invention, ce blindage pourra être utiliser au même titre que l'antenne elle même comme capteur pour la fonction détection capacitive. En effet, les inventeurs ont expérimenté que ce blindage pouvait, dans certains cas au moins, constituer une antenne de détection capacitive pouvant être utilisée dans le cadre de l'invention.

5.2.2 Description de la fonction capteur capacitif de l'antenne

La fonction capteur nécessaire au circuit de détection capacitive est réalisé au moyen d'un matériau conducteur de forme géométrique quelconque. La surface conductrice est dimensionnée de façon à réaliser une électrode compatible avec le circuit sans contact (« CTLSS » pour « contactless ») utilisé et la sensibilité recherchée.

La capacité ainsi formée peut s'exprimer selon la formule :

$$C = E0 \times Er\frac{S}{E}$$

L'autre électrode étant dans ce cas la carte sans contact.

Ainsi, par exemple, une surface de quelques centimètres carrés permet aisément la détection d'un circuit intégré sans contact à environ deux centimètres du lecteur. Il est ainsi possible d'activer le système sans contact quand la détection est réalisée par le dispositif de détection capacitif.

5.3 Variantes de réalisation.

On présente ci-après plusieurs variantes de réalisation de l'invention. Pour plus de facilité, les références numériques des figures précédentes ont été conservées.

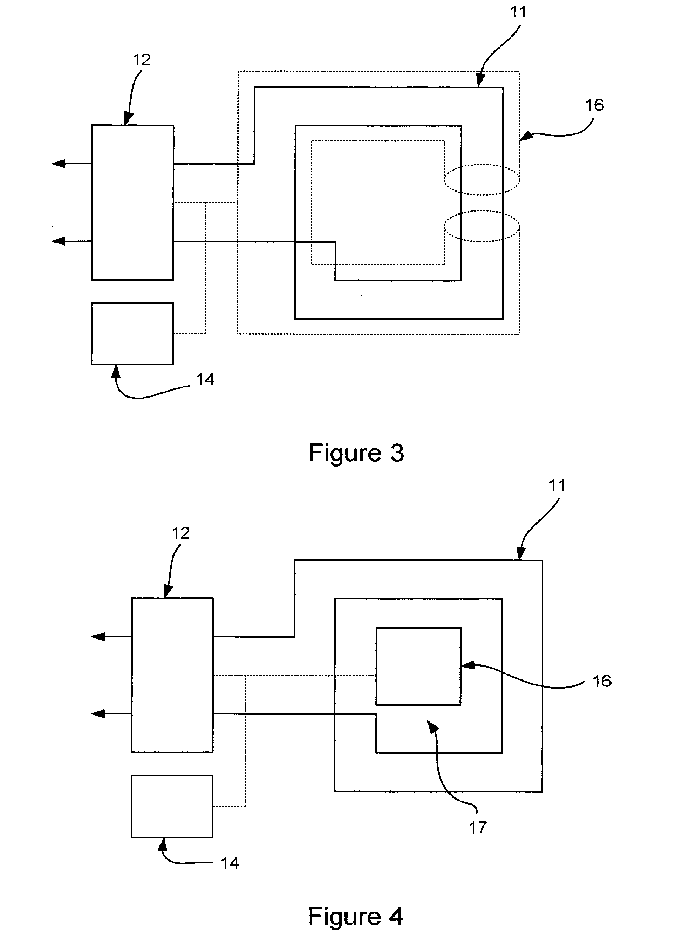

Dans une première variante, présentée en relation avec la figure 3, la forme de l'antenne sans contact (11) n'est pas modifiée pour remplir une fonction capacitive. Par contre, on utilise le blindage de l'antenne sans contact (16) comme antenne de détection capacitive. En effet, les lecteurs sans contacts sont généralement munis d'un blindage qui permet de préserver les composants électroniques qui sont montés sur le circuit électronique (tels que les processeurs). Ce blindage 16 permet de faire en sorte que le champ magnétique émis pour la fonction sans contact ne soit pas perturbé par le fonctionnement général du dispositif (champ électrique). Or, un tel blindage présente une surface conductrice qui peut être utilisée pour réaliser une détection capacitive. Un tel mode de réalisation présente l'avantage de ne pas avoir à modifier les formes des antennes sans contact des dispositifs actuellement produits.

Dans une deuxième variante, présentée en relation avec la figure 4, un point milieu 17, point qui correspond à un point « froid » RF (un emplacement auquel le champ magnétique émis par l'antenne sans contact est nul). Les inventeurs on eu l'ingénieuse idée d'utiliser ce point froid comme position pour placer le capteur capacitif 16. Ainsi, dans cette variante, il n'est toujours pas nécessaire de procéder à une modification de l'antenne RF pour qu'elle remplisse les fonctions capacitives. Il suffit de positionner le capteur capacitif dans un endroit où son fonctionnement ne sera pas perturbé part l'antenne RF.

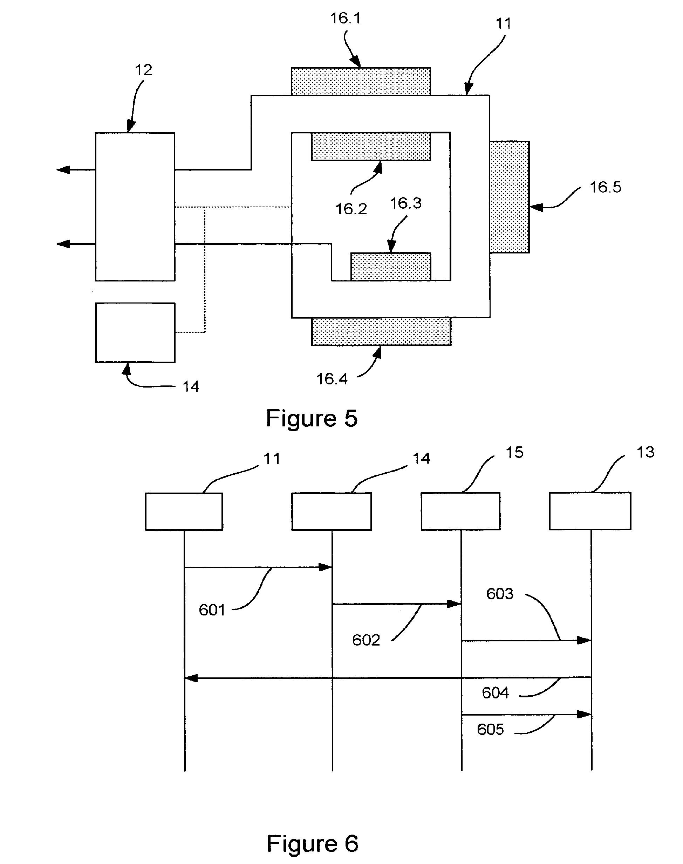

Dans une troisième variante de réalisation présentée en relation avec la figure 5, des zones capacitives (16.1, 16.2, 16.3, 16.4 et 16.5) sont réparties sur l'antenne sans contact 11. Ces zones de part leurs largeurs, permettent une détection d'un objet proche. Cette variante de réalisation est intéressante car elle permet, à l'aide d'une seule et même antenne, de réaliser les deux fonctions : détection capacitive et sans contact.

Dans une autre variante de réalisation, non représentée, on réalise à la fois une modification de l'antenne sans contact 11 et l'ajout de zones de détection capacitives (par exemple trois) qui servent également de boutons cachés pour mettre en oeuvre des fonctions supplémentaires dans le terminal. Ces boutons cachés peuvent par exemple servir à la maintenance du terminal par un opérateur ou encore à proposer des services supplémentaires à l'utilisateur, services qui peuvent être activés une fois que la validité d'une information d'identification ou d'authentification aura été vérifiée par le terminal à l'aide du circuit intégré sans contact. Il est ainsi possible de rétro illuminer les boutons cachés pour les faire apparaître une fois que les paramètres nécessaires à leurs activation ont été vérifiés.

## 5.4 Procédé d'activation

On présente, en relation avec la figure 6, les étapes du procédé d'activation du lecteur sans contact selon l'invention. Un lecteur sans contact auquel s'applique le procédé de l'invention comprend d'une part des moyens de lecture de circuits imprimés sans contact 13. Ces moyens de lecture comprennent au moins une antenne sans contact 11 dont la fonction est d'émettre un champ magnétique à destination d'un circuit sans contact potentiellement présent. Un circuit de traitement 15, comprenant par exemple un processeur est chargé de gérer les communications avec le circuit intégré sans contact. Le lecteur sans contact comprend également des moyens de détection capacitifs 14. Ces moyens de détection 14 peuvent se présenter notamment sous la forme d'une antenne spécifiquement dédiée à cette fonction ou bien par une modification de l'antenne sans contact. Les moyens de détection capacitifs peuvent également comprendre un circuit de traitement comprenant un microprocesseur.

Selon l'invention, le procédé d'activation comprend les étapes suivantes :

- une étape de détection 601, à l'aide des moyens de détection capacitifs, d'une présence a proximité du lecteur sans contact, délivrant une information de présence ;
- une étape d'activation 602, 603 du circuit de lecture sans contact lorsque l'information de présence est positive ;
- une étape d'émission d'un champ magnétique 604 permettant la détection d'un circuit intégré sans contact délivrant une information de présence d'un circuit intégré sans contact ;
- une étape de désactivation 605 du circuit de lecture sans contact lorsque l'information de présence d'un circuit intégré sans contact est négative ;

Ainsi, lorsque l'on approche une main ou une carte contenant un circuit intégré sans contact à proximité du lecteur, le circuit capacitif détecte cette approche et active le lecteur sans contact qui a son tour tente de détecter un circuit intégré sans contact. S'il s'agit d'une erreur et que l'objet qui a été approché du lecteur n'est pas un circuit intégré sans contact, le lecteur sans contact est désactivé pour ne pas consommer inutilement du courant. Dans un mode de réalisation alternatif de l'invention, il est envisagé de réaliser plusieurs tentatives de détection du circuit intégré sans contact à l'aide du lecteur sans contact avant de procéder à sa désactivation, afin d'éviter une désactivation trop rapide et laisser le temps à l'utilisateur, le cas échéant, de présenter le circuit intégré sans contact correctement. Ainsi, le lecteur sans contact dispose du temps nécessaire pour émette des salves de champ magnétique d'une durée suffisante pour permettre l'envoi de la requête en identification du circuit intégré sans contact et la réception du message d'identification en provenance de celui-ci.

## Revendications

1. Lecteur (10) de circuit intégré sans contact (20) comprenant une antenne (11) d'émission d'un champ magnétique permettant une communication avec un circuit intégré sans contact (20), des moyens de détection (14) de la présence d'un circuit intégré sans contact (20) dans un périmètre de communication du lecteur (10) et un circuit de lecture de circuit intégré sans contact, les moyens de détection comprenant :

   - des moyens de mesure d'une capacité, délivrant une information de proximité dudit circuit intégré sans contact, qui comprennent :

      - un capteur capacitif ;
      - un circuit de mesure d'une capacité obtenu par ledit capteur capacitif délivrant ladite information de proximité lorsque la capacité mesurée excède un seuil prédéterminé ;

   - des moyens d'activation dudit circuit de lecture de circuit intégré sans contact en fonction de ladite information de proximité,
   ledit lecteur (10) de circuit intégré sans contact étant **caractérisé en ce que** ledit capteur capacitif est formé à l'aide d'au moins une portion d'un blindage (16) de ladite antenne d'émission d'un champ magnétique, ledit blindage (16) protégeant des circuits électroniques dudit circuit intégré sans contact.

2. Lecteur (10) de circuit intégré sans contact (20) comprenant une antenne (11) d'émission d'un champ magnétique permettant une communication avec un circuit intégré sans contact (20), des moyens de détection (14) de la présence d'un circuit intégré sans contact (20) dans un périmètre de communication du lecteur (10) et un circuit de lecture de circuit intégré sans contact, les moyens de détection comprenant:

   - des moyens de mesure d'une capacité, délivrant une information de proximité dudit circuit intégré sans contact, qui comprennent :

      - un capteur capacitif ;
      - un circuit de mesure d'une capacité obtenu par ledit capteur capacitif délivrant ladite information de proximité lorsque la capacité mesurée excède un seuil prédéterminé ;

- des moyens d'activation dudit circuit de lecture de circuit intégré sans contact en fonction de ladite information de proximité,
ledit lecteur (10) de circuit intégré sans contact étant **caractérisé en ce que** ledit capteur capacitif et ladite antenne (11) d'émission dudit champ magnétique forment une seule et même antenne (11) dont l'inductance et la conductance sont adaptée pour remplir les fonctions de communication sans contact et de détection capacitive.

**3.** Lecteur (10) de circuit intégré sans contact (20) comprenant une antenne (11) d'émission d'un champ magnétique permettant une communication avec un circuit intégré sans contact (20), des moyens de détection (14) de la présence d'un circuit intégré sans contact (20) dans un périmètre de communication du lecteur (10) et un circuit de lecture de circuit intégré sans contact, les moyens de détection comprenant:

- des moyens de mesure d'une capacité, délivrant une information de proximité dudit circuit intégré sans contact, qui comprennent :

- un capteur capacitif ;
- un circuit de mesure d'une capacité obtenu par ledit capteur capacitif délivrant ladite information de proximité lorsque la capacité mesurée excède un seuil prédéterminé ;

- des moyens d'activation dudit circuit de lecture de circuit intégré sans contact en fonction de ladite information de proximité,
ledit lecteur (10) de circuit intégré sans contact étant **caractérisé en ce que** ledit capteur capacitif est disposée à un emplacement auquel le champ magnétique émis par ladite antenne (11) d'émission dudit champ magnétique est sensiblement nul.

**4.** Lecteur de circuit intégré sans contact selon l'une quelconque des revendications 1 à 3, **caractérisé en ce qu'**il comprend en outre des moyens de saisie capacitifs d'une information.

**5.** Procédé d'activation d'un circuit de lecture d'un circuit intégré sans contact (20), ledit circuit de lecture étant intégré à un lecteur (10) de circuit intégré sans contact (20), procédé **caractérisé en ce qu'**il comprend :

- une étape de mesure d'une capacité, à l'aide de moyens de détection capacitifs délivrant une information de proximité d'un circuit intégré sans contact (20), lesdits moyens détection capacitifs comprenant :

- un capteur capacitif, ledit capteur capacitif étant formé à l'aide d'au moins une portion d'un blindage (16) d'une antenne (11) d'émission d'un champ magnétique dudit circuit de lecture d'un circuit intégré sans contact, ledit blindage (16) protégeant des circuits électroniques dudit circuit intégré sans contact (20);
- un circuit de mesure d'une capacité obtenu par ledit capteur capacitif délivrant ladite information de proximité lorsque la capacité mesurée excède un seuil prédéterminé ;

- une étape d'activation d'un circuit de lecture sans contact lorsque l'information de proximité est positive ;
- une étape d'émission d'un champ magnétique permettant une détection dudit circuit intégré sans contact (20) délivrant une information de présence dudit circuit intégré sans contact (20);
- une étape de désactivation dudit circuit de lecture sans contact lorsque ladite information de présence dudit circuit intégré sans contact (20) est négative.

**6.** Procédé d'activation d'un circuit de lecture d'un circuit intégré sans contact (20), ledit circuit de lecture étant intégré à un lecteur (10) de circuit intégré sans contact (20), procédé **caractérisé en ce qu'**il comprend :

- une étape de mesure d'une capacité, à l'aide de moyens de détection capacitifs délivrant une information de proximité d'un circuit intégré sans contact (20), lesdits moyens détection capacitifs comprenant :

- un capteur capacitif, ledit capteur capacitif et une antenne (11) d'émission d'un champ magnétique dudit circuit de lecture d'un circuit intégré sans contact (20) formant une seule et même antenne dont l'inductance et la conductance sont adaptée pour remplir les fonctions de communication sans contact et de détection capacitive;
- un circuit de mesure d'une capacité obtenu par ledit capteur capacitif délivrant ladite information de proximité lorsque la capacité mesurée excède un seuil prédéterminé ;

- une étape d'activation d'un circuit de lecture sans contact lorsque l'information de proximité est positive ;

- une étape d'émission d'un champ magnétique permettant une détection dudit circuit intégré sans contact (20) délivrant une information de présence dudit circuit intégré sans contact (20);
- une étape de désactivation dudit circuit de lecture sans contact lorsque ladite information de présence dudit circuit intégré sans contact (20) est négative.

7. Procédé d'activation d'un circuit de lecture d'un circuit intégré sans contact (20), ledit circuit de lecture étant intégré à un lecteur (10) de circuit intégré sans contact (20), procédé **caractérisé en ce qu'**il comprend :

- une étape de mesure d'une capacité, à l'aide de moyens de détection capacitifs délivrant une information de proximité d'un circuit intégré sans contact (20), lesdits moyens détection capacitifs comprenant :

- un capteur capacitif, ledit capteur capacitif étant disposée à un emplacement auquel le champ magnétique émis par une antenne (11) d'émission d'un champ magnétique dudit circuit de lecture d'un circuit intégré sans contact (20) est sensiblement nul;
- un circuit de mesure d'une capacité obtenu par ledit capteur capacitif délivrant ladite information de proximité lorsque la capacité mesurée excède un seuil prédéterminé ;

- une étape d'activation d'un circuit de lecture sans contact lorsque l'information de proximité est positive ;
- une étape d'émission d'un champ magnétique permettant une détection dudit circuit intégré sans contact (20) délivrant une information de présence dudit circuit intégré sans contact (20);
- une étape de désactivation dudit circuit de lecture sans contact (20) lorsque ladite information de présence dudit circuit intégré sans contact (20) est négative.

8. Programme d'ordinateur **caractérisé en ce qu'**il comprend des instructions de code de programme pour la mise en oeuvre du procédé d'activation selon une quelconque des revendications 5 à 7, lorsque ce programme est exécuté par un processeur.

**Patentansprüche**

1. Leser (10) für kontaktlose integrierte Schaltungen (20), der eine Antenne (11) zum Aussenden eines Magnetfelds, das eine Kommunikation mit einer kontaktlosen integrierten Schaltung (20) ermöglicht, Mittel (14) zur Ermittlung des Vorhandenseins einer kontaktlosen integrierten Schaltung (20) in einem Kommunikationsbereich des Lesers (10) und eine Leseschaltung für kontaktlose integrierte Schaltungen umfasst, wobei die Ermittlungsmittel Folgendes umfassen:

- Mittel zum Messen einer Kapazität, die eine Information über die Nähe der kontaktlosen integrierten Schaltung liefern und die Folgendes umfassen:
- einen kapazitiven Sensor;
- eine Schaltung zur Messung einer Kapazität, die durch den kapazitiven Sensor erhalten wird, die die Information über die Nähe liefert, wenn die gemessene Kapazität einen vorbestimmten Schwellenwert überschreitet;
- Mittel zur Aktivierung der Schaltung zum Lesen der kontaktlosen integrierten Schaltung in Abhängigkeit von der Information über die Nähe, wobei der Leser (10) für kontaktlose integrierte Schaltungen **dadurch gekennzeichnet ist, dass** der kapazitive Sensor mittels mindestens eines Abschnitts einer Bewehrung (16) der Antenne zum Aussenden eines Magnetfelds gebildet ist, wobei die Bewehrung (16) elektronische Schaltungen der kontaktlosen integrierten Schaltung schützt.

2. Leser (10) für kontaktlose integrierte Schaltungen (20), der eine Antenne (11) zum Aussenden eines Magnetfelds, das eine Kommunikation mit einer kontaktlosen integrierten Schaltung (20) ermöglicht, Mittel (14) zur Ermittlung des Vorhandenseins einer kontaktlosen integrierten Schaltung (20) in einem Kommunikationsbereich des Lesers (10) und eine Leseschaltung für kontaktlose integrierte Schaltungen umfasst, wobei die Ermittlungsmittel Folgendes umfasst:

- Mittel zum Messen einer Kapazität, die eine Information über die Nähe der kontaktlosen integrierten Schaltung liefern, die Folgendes umfassen:

einen kapazitiven Sensor;

- eine Schaltung zur Messung einer Kapazität, die durch den kapazitiven Sensor erhalten wird, die die Information über die Nähe liefert, wenn die gemessene Kapazität einen vorbestimmten Schwellenwert überschreitet;
- Mittel zur Aktivierung der Schaltung zum Lesen von kontaktlosen integrierten Schaltungen in Abhängigkeit von der Information über die Nähe, wobei der Leser (10) für kontaktlose integrierte Schaltungen **dadurch gekennzeichnet ist, dass** der kapazitive Sensor und die Antenne (11) zum Aussenden des Magnetfelds eine einzige und selbe Antenne (11) bilden, deren Induktivität und Leitfähigkeit angepasst sind, um die Funktionen der kontaktlosen Kommunikation und der kapazitiven Ermittlung zu erfüllen.

3. Leser (10) für kontaktlose integrierte Schaltungen (20), der eine Antenne (11) zum Aussenden eines Magnetfelds, das eine Kommunikation mit einer kontaktlosen integrierten Schaltung (20) ermöglicht, Mittel (14) zur Ermittlung des Vorhandenseins einer kontaktlosen integrierten Schaltung (20) in einem Kommunikationsbereich des Lesers (10) und eine Leseschaltung für kontaktlose integrierte Schaltungen umfasst, wobei die Ermittlungsmittel Folgendes umfassen:

   - Mittel zum Messen einer Kapazität, die eine Information über die Nähe der kontaktlosen integrierten Schaltung liefern und die Folgendes umfassen:

     einen kapazitiven Sensor;

   - eine Schaltung zur Messung einer Kapazität, die durch den kapazitiven Sensor erhalten wird, die die Information über die Nähe liefert, wenn die gemessene Kapazität einen vorbestimmten Schwellenwert überschreitet;
   - Mittel zur Aktivierung der Schaltung zum Lesen von kontaktlosen integrierten Schaltungen in Abhängigkeit von der Information über die Nähe,
   wobei der Leser (10) für kontaktlose integrierte Schaltungen **dadurch gekennzeichnet ist, dass** der kapazitive Sensor an einer Stelle angeordnet ist, an der das durch die Antenne (11) zum Aussenden des Magnetfelds ausgesendete Magnetfeld im Wesentlichen null ist.

4. Leser für kontaktlose integrierte Schaltungen nach einem der Ansprüche 1 bis 3, **dadurch gekennzeichnet, dass** er ferner kapazitive Mittel zur Erfassung einer Information umfasst.

5. Verfahren zur Aktivierung einer Schaltung zum Lesen von kontaktlosen integrierten Schaltungen (20), wobei die Leseschaltung in einen Leser (10) für kontaktlose integrierte Schaltungen (20) integriert ist, wobei das Verfahren **dadurch gekennzeichnet ist, dass** es Folgendes umfasst:

   - einen Schritt zum Messen einer Kapazität mittels kapazitiver Ermittlungsmittel, die eine Information über die Nähe einer kontaktlosen integrierten Schaltung (20) liefern, wobei die kapazitiven Ermittlungsmittel Folgendes umfassen:

einen kapazitiven Sensor, wobei der kapazitive Sensor mittels mindestens eines Abschnitts einer Bewehrung (16) einer Antenne (11) zum Aussenden eines Magnetfelds der Schaltung zum Lesen einer kontaktlosen integrierten Schaltung gebildet ist, wobei die Bewehrung (16) elektronische Schaltungen der kontaktlosen integrierten Schaltung (20) schützt;
eine Schaltung zum Messen einer Kapazität, die durch den kapazitiven Sensor erhalten wird, der die Information über die Nähe liefert, wenn die gemessene Kapazität einen vorbestimmten Schwellenwert überschreitet;

   - einen Schritt zum Aktivieren einer kontaktlosen Leseschaltung, wenn die Information über die Nähe zutreffend ist;
   - einen Schritt zum Aussenden eines Magnetfelds, der eine Ermittlung der kontaktlosen integrierten Schaltung (20) ermöglicht, die eine Information über das Vorhandensein der kontaktlosen integrierten Schaltung (20) liefert;
   - einen Schritt zum Deaktivieren der kontaktlosen Leseschaltung, wenn die Information über das Vorhandensein der kontaktlosen integrierten Schaltung (20) nicht zutreffend ist.

6. Verfahren zum Aktivieren einer Schaltung zum Lesen einer kontaktlosen integrierten Schaltung (20), wobei die Leseschaltung in einen Leser (10) für kontaktlose integrierte Schaltungen (20) integriert ist, wobei das Verfahren **dadurch gekennzeichnet ist, dass** es Folgendes umfasst:

   - einen Schritt zum Messen einer Kapazität mittels kapazitiver Ermittlungsmittel, die eine Information über die Nähe einer kontaktlosen integrierten Schaltung (20) liefern, wobei die kapazitiven Ermittlungsmittel Folgendes umfassen:

einen kapazitiven Sensor, wobei der kapazitive Sensor und eine Antenne (11) zum Aussenden eines Magnetfelds der Leseschaltung für eine kontaktlose integrierte Schaltung (20) eine einzige und selbe Antenne (11) bilden, deren Induktivität und Leitfähigkeit angepasst sind, um die Funktionen der kontaktlosen Kommunikation und der kapazitiven Ermittlung zu erfüllen;
eine Schaltung zum Messen einer Kapazität, die durch den kapazitiven Sensor erhalten wird, der die Information über die Nähe liefert, wenn die gemessene Kapazität einen vorbestimmten Schwellenwert überschreitet;

- einen Schritt zum Aktivieren einer kontaktlosen Leseschaltung, wenn die Information über die Nähe zutreffend ist;
- einen Schritt zum Aussenden eines Magnetfelds, das eine Ermittlung der kontaktlosen integrierten Schaltung (20) ermöglicht, die eine Information über das Vorhandensein der kontaktlosen integrierten Schaltung (20) liefert;
- einen Schritt zum Deaktivieren der kontaktlosen Leseschaltung, wenn die Information über das Vorhandensein der kontaktlosen integrierten Schaltung (20) nicht zutreffend ist.

7. Verfahren zum Aktivieren einer Schaltung zum Lesen einer kontaktlosen integrierten Schaltung (20), wobei die Leseschaltung in einen Leser (10) für kontaktlose integrierte Schaltungen (20) integriert ist, wobei das Verfahren **dadurch gekennzeichnet ist, dass** es Folgendes umfasst:

- einen Schritt zum Messen einer Kapazität mittels kapazitiver Ermittlungsmittel, die eine Information über die Nähe einer kontaktlosen integrierten Schaltung (20) liefern, wobei die kapazitiven Ermittlungsmittel Folgendes umfassen:

einen kapazitiven Sensor, wobei der kapazitive Sensor an einer Stelle angeordnet ist, an der das durch eine Antenne (11) zum Aussenden eines Magnetfelds der Schaltung zum Lesen einer kontaktlosen integrierten Schaltung (20) ausgesendete Magnetfeld im Wesentlichen null ist;
eine Schaltung zum Messen einer Kapazität, die durch den kapazitiven Sensor erhalten wird, die die Information über die Nähe liefert, wenn die gemessene Kapazität einen vorbestimmten Schwellenwert überschreitet;
einen Schritt zum Aktivieren einer kontaktlosen Leseschaltung, wenn die Information über die Nähe zutreffend ist;

- einen Schritt zum Aussenden eines Magnetfelds, der eine Ermittlung der kontaktlosen integrierten Schaltung (20) ermöglicht, die eine Information über das Vorhandensein der kontaktlosen integrierten Schaltung (20) liefert;
- einen Schritt zum Deaktivieren der kontaktlosen Leseschaltung (20), wenn die Information über das Vorhandensein der kontaktlosen integrierten Schaltung (20) nicht zutreffend ist.

8. Computerprogramm, **dadurch gekennzeichnet, dass** es Programmcodebefehle für die Durchführung des Aktivierungsverfahrens nach einem der Ansprüche 5 bis 7 umfasst, wenn dieses Programm durch einen Prozessor ausgeführt wird.

**Claims**

1. Contactless integrated circuit (20) reader (10), comprising a magnetic field emission antenna (11) allowing communication with a contactless integrated circuit (20), means (14) for detecting the presence of a contactless integrated circuit (20) within a perimeter of communication of said reader (10) and a contactless integrated circuit reading circuit, said detection means comprising:

- means for measuring a capacitance, providing information concerning the proximity of said contactless integrated circuit, which means comprise:

- a capacitive sensor;
- a circuit for measuring a capacitance obtained by said capacitive sensor providing said proximity information when the measured capacitance exceeds a predetermined threshold;

- means for activating said contactless integrated circuit reading circuit as a function of said proximity information,
said contactless integrated circuit reader (10) being **characterised in that** said capacitive sensor is formed using at least one portion of a shield (16) of said magnetic field emission antenna, said shield (16) protecting electronic circuits of said contactless integrated circuit.

2. Contactless integrated circuit (20) reader (10), comprising a magnetic field emission antenna (11) allowing communication with a contactless integrated circuit (20), means (14) for detecting the presence of a contactless integrated circuit (20) within a perimeter of communication of said reader (10) and a contactless integrated circuit reading circuit, said detection means comprising:

- means for measuring a capacitance, providing information concerning the proximity of said contactless integrated circuit, which means comprise:

- a capacitive sensor;
- a circuit for measuring a capacitance obtained by said capacitive sensor providing said proximity information when the measured capacitance exceeds a predetermined threshold;

- means for activating said contactless integrated circuit reading circuit as a function of said proximity information,
said contactless integrated circuit reader (10) being **characterised in that** said capacitive sensor and said magnetic field emission antenna (11) form the same antenna (11), the inductance and the conductance of which are adapted to fulfil the contactless communication and capacitive detection functions.

3. Contactless integrated circuit (20) reader (10), comprising a magnetic field emission antenna (11) allowing communication with a contactless integrated circuit (20), means (14) for detecting the presence of a contactless integrated circuit (20) within a perimeter of communication of said reader (10) and a contactless integrated circuit reading circuit, said detection means comprising:

- means for measuring a capacitance, providing information concerning the proximity of said contactless integrated circuit, which means comprise:

- a capacitive sensor;
- a circuit for measuring a capacitance obtained by said capacitive sensor providing said proximity information when the measured capacitance exceeds a predetermined threshold;

- means for activating said contactless integrated circuit reading circuit as a function of said proximity information,
said contactless integrated circuit reader (10) being **characterised in that** said capacitive sensor is disposed at a location where the magnetic field emitted by said magnetic field emission antenna (11) is substantially zero.

4. Contactless integrated circuit reader according to any one of claims 1 to 3, **characterised in that** it further comprises capacitive information entry means.

5. Method for activating a contactless integrated circuit (20) reading circuit, said reading circuit being integrated into a contactless integrated circuit (20) reader (10), which method is **characterised in that** it comprises:

- a step of measuring a capacitance, using capacitive detection means providing information concerning the proximity of a contactless integrated circuit (20), said capacitive detection means comprising:

- a capacitive sensor, said capacitive sensor being formed using at least one portion of a shield (16) of a magnetic field emission antenna (11) of said contactless integrated circuit reading circuit, said shield (16) protecting electronic circuits of said contactless integrated circuit (20);
- a circuit for measuring a capacitance obtained by said capacitive sensor providing said proximity information when the measured capacitance exceeds a predetermined threshold;

- a step of activating a contactless reading circuit when said proximity information is positive;
- a step of emitting a magnetic field allowing the detection of said contactless integrated circuit (20) providing information concerning the presence of said contactless integrated circuit (20);
- a step of deactivating said contactless reading circuit when said presence information of said contactless integrated circuit (20) is negative.

6. Method for activating a contactless integrated circuit (20) reading circuit, said reading circuit being integrated into a contactless integrated circuit (20) reader (10), which method is **characterised in that** it comprises:

- a step of measuring a capacitance, using capacitive detection means providing information concerning the proximity of a contactless integrated circuit (20), said capacitive detection means comprising:

- a capacitive sensor, said capacitive sensor and a magnetic field emission antenna (11) of said contactless integrated circuit (20) reading circuit forming the same antenna, the inductance and the conductance of which are adapted to fulfil the contactless communication and capacitive detection functions;
- a circuit for measuring a capacitance obtained by said capacitive sensor providing said proximity information when the measured capacitance exceeds a predetermined threshold;

- a step of activating a contactless reading circuit when said proximity information is positive;
- a step of emitting a magnetic field allowing the detection of said contactless integrated circuit (20) providing information concerning the presence of said contactless integrated circuit (20);
- a step of deactivating said contactless reading circuit when said presence information of said contactless integrated circuit (20) is negative.

7. Method for activating a contactless integrated circuit (20) reading circuit, said reading circuit being integrated into a contactless integrated circuit (20) reader (10), which method is **characterised in that** it comprises:

- a step of measuring a capacitance, using capacitive detection means providing information concerning the proximity of a contactless integrated circuit (20), said capacitive detection means comprising:

- a capacitive sensor, said capacitive sensor being disposed at a location where the magnetic field emitted by a magnetic field emission antenna (11) of said contactless integrated circuit (20) reading circuit is substantially zero;
- a circuit for measuring a capacitance obtained by said capacitive sensor providing said proximity information when the measured capacitance exceeds a predetermined threshold;

- a step of activating a contactless reading circuit when said proximity information is positive;
- a step of emitting a magnetic field allowing the detection of said contactless integrated circuit (20) providing information concerning the presence of said contactless integrated circuit (20);
- a step of deactivating said contactless reading circuit (20) when said presence information of said contactless integrated circuit (20) is negative.

8. Computer program, **characterised in that** it comprises program code instructions for implementing the activation method according to any one of claims 5 to 7 when said program is executed by a processor.

Figure 1

Figure 2

Figure 3

Figure 4

16.1    11

12

16.5

16.2    16.3

14

16.4

Figure 5

11      14      15      13

601

603

602

604

605

Figure 6

**EP 2 256 663 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003052672 A
- WO 0065551 A
- DE 3740180 C1
- US 2005156752 A1